# EUROPÄISCHE PATENTANMELDUNG

(11) **EP 2 306 147 A2**
(43) Veröffentlichungstag der Anmeldung: **06.04.2011**
(21) Anmeldenummer: 10172168.6
(22) Anmeldetag: 06.08.2010
(51) Int. Cl.: G01C 15/00

(54) **Pendellaservorrichtung mit arretierbarer Pendelanordnung**

(30) Priorität: 05.10.2009 DE 102009045324
(71) Anmelder: Robert Bosch GmbH, 70442 Stuttgart (DE)
(72) Erfinder: Kageler, Sven, 35043, Marburg (DE)

(57) **Zusammenfassung**

Die Erfindung betrifft eine Pendellaservorrichtung (1, 1', 1 ") zur Nivellierung und/oder Markierung mit einem Gehäuse (4), einer an dem Gehäuse (4) angeordneten Pendelanordnung (2, 2'), einer an der Pendelanordnung (2, 2') angebrachten Lasereinheit (13), die mittels der Pendelanordnung (2, 2') unabhängig von der Gehäuseausrichtung frei selbstausrichtbar und zur Erzeugung von am Lot ausgerichteter Laserstrahlung ausgelegt ist, und einer Sicherungsvorrichtung (3, 3', 3"), mit welcher die Pendelanordnung (2, 2') arretierbar ist, wobei die Sicherungsvorrichtung (3, 3', 3") derart ausgeführt ist, dass sie die Pendelanordnung (2, 2') bei einer durch eine Bewegung des Gehäuses (4) bewirkten Auslenkung der Pendelanordnung (2, 2') über einen Grenzwinkel α automatisch arretiert.

## Beschreibung

### Stand der Technik

Die vorliegende Erfindung betrifft eine Pendellaservorrichtung zur Nivellierung und/oder Markierung mit einem Gehäuse, einer an dem Gehäuse angeordneten Pendelanordnung, einer an der Pendelanordnung angebrachten Lasereinheit, die mittels der Pendelanordnung unabhängig von der Gehäuseausrichtung frei selbstausrichtbar und zur Erzeugung von am Lot ausgerichteter Laserstrahlung ausgelegt ist, und einer Sicherungsvorrichtung, mit welcher die Pendelanordnung arretierbar ist.

Eine solche Pendellaservorrichtung ist beispielsweise aus der DE 10 2007 039 342 A1 bekannt und wird verwendet, um Nivellier-, Ausricht- und/oder Markierungsaufgaben insbesondere im Bereich des Handwerks durchzuführen. Dazu erzeugt die Pendellaservorrichtung Lasermarkierungen, die eine von der Ausrichtung von Böden, Decken oder Wänden unabhängige Referenz darstellen. Die Pendellaservorrichtung umfasst üblicherweise eine an einer Pendelanordnung gehalterte Lasereinheit, die in einem Gehäuse freischwingend aufgehängt ist. Das Gehäuse wird entweder auf dem Boden aufgestellt oder an einer Decke oder Wand befestigt, wobei Abweichungen von der horizontalen bzw. vertikalen Ausrichtung und Unebenheiten dadurch ausgeglichen werden, dass die Lasereinheit in dem Gehäuse unter Ausnutzung der Schwerkraft ausgerichtet wird.

Während des Einsatzes einer solchen Pendellaservorrichtung, insbesondere bei einem Sturz von einem Stativ oder beim Transport kann die Pendellaservorrichtung so stark ausgelenkt werden, dass die Lasereinheit bzw. die Pendelanordnung mit dem Gehäuse in Kontakt kommt, was mit einer Beschädigung oder Dejustierung der Lasereinheit einhergehen kann. Zur Vermeidung eines solchen Kontaktes schlägt die DE 10 2007 039 342 A1 vor, die Pendellaservorrichtung mit einer Sicherungsvorrichtung auszustatten, mit der die Lasereinheit bzw. die Pendelanordnung für Transportzwecke arretierbar ist, um Beschädigungen zu vermeiden. Die Betätigung der Sicherungsvorrichtung erfolgt jedoch manuell durch den Nutzer. Entsprechend besteht stets die Gefahr, dass das Arretieren versehentlich unterbleibt. Zudem kann mit einer solchen Sicherungsvorrichtung eine Beschädigung der Pendellaservorrichtung während ihres Einsatzes nicht ausgeschlossen werden.

Ausgehend von dem oben genannten Stand der Technik ist es eine Aufgabe der vorliegenden Erfindung, eine Pendellaservorrichtung der eingangs genannten Art bereitzustellen, bei der die Lasereinheit und/oder die Pendelanordnung sowohl während ihres Transports als auch während ihres Einsatzes vor Beschädigungen aufgrund einer zu starken Auslenkung der Pendelanordnung geschützt ist/sind.

Diese Aufgabe ist erfindungsgemäß durch eine Pendellaservorrichtung der eingangs genannten Art gelöst, bei der die Sicherungsvorrichtung derart ausgeführt ist, dass sie die Pendelanordnung bei einer durch eine Bewegung des Gehäuses bewirkten Auslenkung der Pendelanordnung über einen Grenzwinkel automatisch arretiert.

Grundgedanke der vorliegenden Erfindung ist es also, einen Kontakt der Pendelanordnung und/oder der Lasereinheit mit dem Gehäuse aufgrund einer zu starken Auslenkung der Pendelanordnung dadurch zu verhindern, dass die Pendelanordnung mit Hilfe der Sicherungsvorrichtung automatisch arretiert wird, bevor die Pendelanordnung und/oder die Lasereinheit mit dem Gehäuse in Kontakt kommen kann. Bauartbedingt hat die Pendelanordnung üblicherweise einen Grenzwinkel im Bereich von etwa 5° - 15° bezogen auf die Ausrichtung der Pendelanordnung in ihrer Ruhestellung, wenn das Gehäuse lotrecht ausgerichtet ist. Innerhalb dieses Grenzwinkels kann die Pendelanordnung frei im Raum schwingen. Wenn der Grenzwinkel erreicht oder gar überschritten wird, erfolgt die automatische Arretierung der Pendelanordnung, so dass ein Kontakt mit dem Gehäuse und eine damit häufig verbundene Beschädigung oder Dejustierung der Pendelanordnung bzw. der Lasereinheit sicher vermieden wird. Dabei kann sowohl ein übermäßiges Neigen des Gehäuses wie auch eine horizontale Beschleunigung zusammen mit der Trägheit der Pendelanordnung Ursache für das Erreichen des Grenzwinkels sein, so dass in beiden Fällen eine Beschädigung der Lasereinheit und/oder der Pendelanordnung verhindert wird.

Gemäß einer ersten Ausführungsform der vorliegenden Erfindung kann die Sicherungsvorrichtung ein zweiarmiges Sicherungspendel mit einem Pendelarm, an dem eine Pendelmasse gehalten ist, und einem Arretierarm, der derart ausgeführt und angeordnet ist, dass er die Pendelanordnung bei einer Auslenkung über den Grenzwinkel arretiert, umfassen, wobei das Sicherungspendel beabstandet derart unterhalb der Pendelanordnung vorgesehen ist, dass es in einer senkrechten Ruhestellung lotrecht unter der Pendelanordnung positioniert ist. Durch den Abstand des Arretierarms von der Pendelanordnung in der senkrechten Position kann außerdem der Grenzwinkel definiert werden. Je größer der Abstand ausgeführt ist, desto größer ist der Grenzwinkel, bei dem eine Arretierung der Pendelanordnung stattfindet. Durch den Pendelarm erfährt das Sicherungspendel stets die gleiche Auslenkung wie die Pendelanordnung, so dass der Arretierarm durch eine entsprechende Auslenkung beim Erreichen des Grenzwinkels die Pendelanordnung arretieren kann. Dabei kann durch die Abstimmung der Pendelmasse mit der entsprechenden Masse der Pendelanordnung das Verhältnis der Trägheitskräfte eingestellt werden, um eine zuverlässige Funktion des Sicherungspendels zu bewirken.

In weiterer Ausgestaltung der Erfindung ist an dem Arretierarm ein Kontaktelement, insbesondere in der Form einer Scheibe oder eines Tellers vorgesehen, das bei der Auslenkung des Gehäuses über den Grenzwinkel in reibschlüssigen Kontakt mit der Pendelanordnung tritt und diese arretiert. Somit wird die Pendelanordnung durch ein Verkanten mit dem Kontaktelement arretiert. Zur Schwingungsdämpfung kann an der Pendelanordnung zusätzlich ein Magnet vorgesehen sein, wobei das Kontaktelement aus ferromagnetischem Material hergestellt ist, oder umgekehrt.

Außerdem kann das Kontaktelement an dem äußeren Ende des Arretierarms angeordnet sein. Dadurch weist der Arretierarm eine minimale Länge und damit verbunden ein minimales Gewicht auf, um ein maximales Trägheitsmoment des Pendelarms für die Arretierung der Pendelanordnung nutzen zu können.

In besonders vorteilhafter Ausgestaltung der Erfindung kann das Kontaktelement an seiner der Pendelanordnung gegenüberliegenden Seite eine gummierte Beschichtung aufweisen. Dies bewirkt einerseits eine Dämpfung, wenn die Pendelanordnung zur Arretierung mit dem Kontaktelement in Berührung kommt, und andererseits weist Gummi einen hohen Reibungskoeffizienten auf, so dass eine zuverlässige Arretierung der Pendelanordnung erfolgt.

Auch kann das Sicherungspendel eine kardanische Lagerung aufweisen, die eine freie Beweglichkeit des Sicherungspendels ermöglicht.

Gemäß einer zweiten Ausführungsform der vorliegenden Erfindung kann die Sicherungsvorrichtung ein zweiarmiges Sicherungspendel, das an einem Pendelarm, an dem eine Pendelmasse gehalten ist, und einen Betätigungsarm aufweist, sowie eine Arretierhülse umfassen, wobei die Arretierhülse derart positioniert ist, dass sie die Pendelanordnung in einer senkrechten Ruhestellung koaxial umgibt und entlang der Pendelanordnung zwischen einer oberen Arbeitsposition, in der sie die Pendelanordnung mit einem Spiel umfasst, so dass die Pendelanordnung in dem Arbeitsbereich bewegbar ist, und einer unteren Sicherungsposition, in der sie die Pendelanordnung im wesentlichen formschlüssig umfasst, axial verschiebbar ist, und der Betätigungsarm mit der Arretierhülse gekoppelt ist, um bei einer durch eine Bewegung des Gehäuses bewirkten Auslenkung der Pendelanordnung eine Verschiebung der Arretierhülse zu bewirken. In diesem Fall erfolgt eine Arretierung der Pendelanordnung dadurch, dass die Arretierhülse die Pendelanordnung beim Erreichen des Grenzwinkels umfasst und eine weitere Auslenkung der Pendelanordnung verhindert. Die Betätigung erfolgt durch das Sicherungspendel, welches genauso wie die Pendelanordnung an der Schwerkraft ausgerichtet wird. Da von der Pendelanordnung praktisch keine bzw. nur geringe Kräfte in axialer Richtung auf die Arretierhülse übertragen werden, kann das Sicherungspendel mit einer geringen Masse und damit auch klein ausgeführt werden, wodurch die Baugröße der Pendellaservorrichtung insgesamt gering ist. Die Art der Kopplung von Betätigungsarm und Arretierhülse kann dabei im Prinzip beliebig ausgeführt sein.

Als besonders vorteilhaft wird erachtet, dass der Betätigungsarm in einem Winkel von weniger als 180°, vorzugsweise etwa 90° zu dem Pendelarm angeordnet und mit seinem freien Ende zumindest in ausgelenktem Zustand der Pendelanordnung auf der Arretierhülse aufliegt. Es ergibt sich eine direkte Kopplung von Arretierhülse und Betätigungsarm, wodurch der Aufbau der Sicherungsvorrichtung vereinfacht wird.

In weiterer Ausgestaltung der Erfindung können mehrere Sicherungspendel vorgesehen sein, die in Umfangsrichtung versetzt um die Arretierhülse angeordnet sein, wobei der Betätigungsarm jedes Sicherungspendels mit der Arretierhülse gekoppelt ist oder mit seinem freien Ende darauf aufliegt. Somit kann auch mit Sicherungspendeln, die eine Arretierung der Pendelanordnung in einer linearen Achse bewirken, eine Arretierung bei einer Bewegung des Gehäuses in verschiedenen Richtungen erreicht werden. In besonders vorteilhafter Ausgestaltung sind die Sicherungspendel um 90° versetzt angeordnet. In diesem Fall ist jedes Sicherungspendel für die Arretierung in einer orthogonalen Richtung der Ebene vorgesehen.

Vorzugsweise verjüngt sich der Pendelarm zumindest Abschnittsweise zu seinem Pendellager, um das Überführen der Arretierhülse in die Sicherungsposition zu erleichtern. Die Verjüngung wirkt somit als Auflaufschräge, an der die Unterkante der Arretierhülse beim Überführen in die Sicherungsposition aufläuft. Dadurch wird die Pendelanordnung aus der lotrechten Position in eine Position innerhalb des Grenzwinkels bewegt. Bei geringem Spiel zwischen der Arretierhülse und der Pendelanordnung in der Sicherungsposition erfolgt die Arretierung näherungsweise in der Ruhestellung.

Weiterhin kann ein elastisches Rückstellelement vorgesehen und derart mit der Arretierhülse gekoppelt sein, dass die Rückstellkraft des Rückstellelements der Gewichtskraft der Arretierhülse entgegenwirkt. Somit kann die Arretierhülse von dem Sicherungspendel mit einer nur geringen Kraft aus der Arbeitsposition in die Sicherungsposition überführt werden, so dass das Sicherheitspendel mit einer besonders geringen Masse und damit besonders klein ausgeführt sein kann. Insbesondere sollte die Rückstellkraft ungefähr gleich der Gewichtskraft der Arretierhülse sein.

Schließlich kann die Lasereinheit in allen Ausführungsformen einen Linienlaser oder einen Rotationslaser umfassen. Der Rotationslaser bewirkt durch Rotationen der Laserquelle oder eines strahlumlenkenden Bauelements in einer vorzugebenden Ebene eine Auffächerung des Strahls, so dass eine Referenzfläche definiert wird, wohingegen Linienlaser eine besonders präzise Ausrichtung auf einer Referenzfläche erlauben.

### Kurze Beschreibung der Zeichnungen

Weitere Ausgestaltungen und Vorteile der Erfindung ergeben sich aus den Unteransprüchen sowie aus der nachfolgenden Beschreibung von Ausführungsbeispielen unter Bezugnahme auf die beiliegende Zeichnung. In der Zeichnung zeigt:
Figur 1 eine schematische Darstellung einer Pendelanordnung mit einer Sicherungsvorrichtung gemäß einer ersten Ausführungsform der vorliegenden Erfindung in der Ruhestellung,
Figur 2 die Pendelanordnung und Sicherungsvorrichtung aus Figur 1 bei einer Auslenkung um den Grenzwinkel,
Figur 3 die Pendelanordnung und die Sicherungsvorrichtung aus Figur 1 bei einer theoretischen Auslenkung über den Grenzwinkel,
Figur 4 eine schematische Darstellung einer Pendelanordnung und einer Sicherungsvorrichtung gemäß einer zweiten Ausführungsform der vorliegenden Erfindung in der Ruhestellung,
Figur 5 die Pendelanordnung und Sicherungsvorrichtung aus Figur 4 bei einer Auslenkung um den Grenzwinkel in der Sicherungsposition, und
Figur 6 die Pendelanordnung und Sicherungsvorrichtung aus Figur 4 bei einer Auslenkung über den Grenzwinkel.

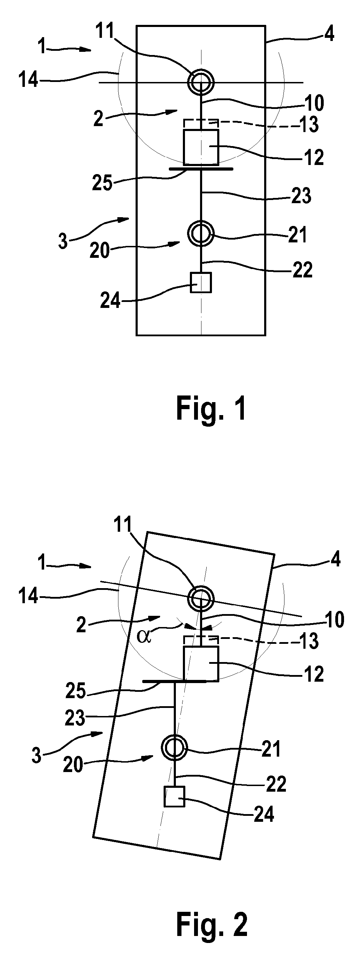

Die Figuren 1 bis 3 zeigen eine Pendellaservorrichtung 1 gemäß einer ersten Ausführungsform der vorliegenden Erfindung. Die Pendellaservorrichtung 1 umfasst eine Pendelanordnung 2, eine Sicherungsvorrichtung 3 und ein Gehäuse 4, in dem die Pendelanordnung 2 und die Sicherungsvorrichtung 3 gehalten sind.

Die Pendelanordnung 2 umfasst einen Pendelarm 10, der an seinem oberen Ende in einem Lager 11 frei hängend an dem Gehäuse 4 gehalten ist. An dem unteren Ende des Pendelarms 10 ist eine Pendelmasse 12 vorgesehen, die mit einer schematisch dargestellten Lasereinrichtung 13 verbunden ist. Die Pendelanordnung 2 ist in dem Lager 11 frei schwingend gehalten, wobei ihre Beweglichkeit in der Zeichnungsebene durch das Kreissegment 14 angedeutet ist.

Unterhalb der Pendelanordnung 2 ist beabstandet die Sicherungsvorrichtung 3 vorgesehen. Die Sicherungsvorrichtung 3 umfasst ein zweiarmiges Sicherungspendel 20, das mit einem kardanischen Lager 21 frei drehbar an dem Gehäuse 4 gehalten ist, wobei das Sicherungspendel 20 in der senkrechten Ruhestellung lotrecht unter der Pendelanordnung 2 positioniert ist. Das Sicherungspendel 20 umfasst einen Pendelarm 22 und einen Arretierarm 23, die sich von dem kardanischen Lager 21 in entgegengesetzte Richtungen erstrecken. An dem äußeren Ende des Pendelarms 22 ist eine Pendelmasse 24 gehalten. An dem äußeren Ende des Arretierarms 23 ist ein senkrecht dazu ausgerichtetes Kontaktelement 25 in Form einer Scheibe angebracht. Die Scheibe 25 weist an ihrer der Pendelanordnung 2 zugewandten Seite eine nicht näher gezeigte gummierte Beschichtung auf.

Ein Verkippen der Pendellaservorrichtung 1 aus ihrer senkrechten Ruhelage führt zu einer Auslenkung der Pendelanordnung 2 und des Sicherungspendels 20, wodurch sich der Abstand zwischen der Scheibe 25 und dem unteren Ende der Pendelanordnung 2, also der Pendelmasse 12 verkürzt. Beim Erreichen eines Grenzwinkels α, der vorliegend 10° beträgt, tritt die Scheibe 25 mit der Pendelmasse 12 in reibschlüssigen Kontakt und bewirkt eine Arretierung der Pendelanordnung 2, wie es in Figur 2 gezeigt ist. Der Grenzwinkel α ist üblicherweise konstruktionsbedingt durch die Abmessungen des Gehäuseinnenraums und der Pendelanordnung 1 vorgegeben und kann entsprechend von 10° verschieden gewählt werden.

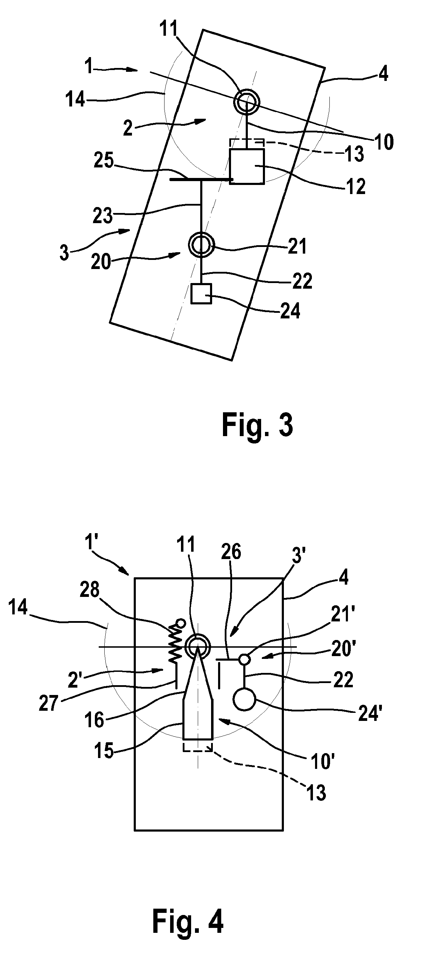

Ein weiteres Verkippen der Pendellaservorrichtung 1 über den Grenzwinkel α hinaus würde, wie in Figur 3 gezeigt, zu einer theoretischen Überlappung von der Scheibe 25 mit der Pendelmasse 12 der Pendelanordnung 2 führen. Allerdings bewirkt das Verkanten der Scheibe 25 mit der Pendelmasse 12 beim Erreichen des Grenzwinkels α, dass trotz eines weiteren Verkippens der Pendellaservorrichtung 1 das Sicherungspendel 3 und die Pendelanordnung 2 nicht über den Grenzwinkel hinaus ausgelenkt werden.

Die Sicherungsvorrichtung 3 funktioniert auf die gleiche Weise, wenn die Pendellaservorrichtung 1 horizontal beschleunigt wird. Durch die Trägheit der Pendelmasse 12 der Pendelanordnung 2 kann diese grundsätzlich über den Grenzwinkel α hinaus ausgelenkt werden. Da das Sicherungspendel 20 jedoch ebenfalls durch seine Trägheit ausgelenkt wird, bewirkt das Erreichen des Grenzwinkels α auch in diesem Fall ein Arretierung der Pendelanordnung 2, so dass diese bzw. die Lasereinheit nicht durch Kontakt mit dem Gehäuse 4 beschädigt oder dejustiert werden kann.

Beim Transport der Pendellaservorrichtung 1 wird diese üblicherweise in einem Koffer liegend aufbewahrt. Durch das Hinlegen wird die Pendelanordnung 2 stets bis zum Grenzwinkel α ausgelenkt, so dass sie während des Transports immer durch die Sicherungsvorrichtung 3 arretiert ist.

Die Figuren 4 bis 6 zeigen eine Pendellaservorrichtung 1' gemäß einer zweiten Ausführungsform der vorliegenden Erfindung. Bauteile die im Wesentlichen identisch zu denjenigen der ersten Ausführungsform sind, sind nachfolgend mit denselben Bezugsziffern gekennzeichnet.

Die Pendellaservorrichtung 1' umfasst eine Pendelanordnung 2', eine Sicherungsvorrichtung 3' und ein Gehäuse 4, in dem die Pendelanordnung 2' und die Sicherungsvorrichtung 3' gehalten sind.

Die Pendelanordnung 2' umfasst einen Pendelarm 10', der einen unteren zylindrischen Bereich 15 und einen oberen kegelförmigen Bereich 16 aufweist. Der Pendelarm 10' ist an der Spitze des kegelförmigen Bereichs 16 mit Hilfe eines Lagers 11 frei hängend gehalten. An dem Pendelarm 10' ist unterhalb des zylindrischen Bereichs 15 eine Laseranordnung 13 gehalten. Die prinzipielle Beweglichkeit der Pendelanordnung 10' ist durch ein Kreissegment 14 angedeutet.

Die Sicherungsvorrichtung 3' umfasst vier identische zweiarmige Sicherungspendel 20', die jeweils mit Hilfe eines Pendellagers 21 an dem Gehäuse 4 gehalten sind, und eine Arretierhülse 27. Jedes Sicherungspendel 20' umfasst einen Pendelarm 22, an dem eine Pendelmasse 24' gehalten ist, und einen Betätigungsarm 26, wobei die Sicherungspendel 20' um jeweils 90° versetzt um die Arretierhülse 27 positioniert sind. In den Figuren ist aus Gründen der Übersichtlichkeit nur eines der Sicherungspendel 20' exemplarisch dargestellt.

Die Arretierhülse 27 umgibt die Pendelanordnung 2' in ihrer senkrechten Ruhestellung, die in Figur 4 gezeigt ist, koaxial. Außerdem ist die Arretierhülse 27 entlang der Pendelanordnung 2' zwischen einer oberen Arbeitsposition, in der sie die Pendelanordnung 2' mit einem Spiel umfasst, so dass die Pendelanordnung 2' in der Arretierhülse 27 frei schwingen kann, und einer unteren Sicherungsposition, in der sie die Pendelanordnung 2' im Wesentlichen formschlüssig umfasst, axial verschiebbar. Die Arretierhülse 27 ist an ihrem oberen Ende mit den freien Enden der Betätigungsarme 26 der beiden Sicherungspendel 20' verbunden. Eine Auslenkung eines Sicherungspendels 20' bewirkt eine axiale Bewegung der Arretierhülse 27.

Des weiteren umfasst die Sicherungsvorrichtung 3' ein elastisches Rückstellelement 28, das derart mit der Arretierhülse 27 derart gekoppelt ist, dass die Rückstellkraft des Rückstellelements 28 der Gewichtskraft der Arretierhülse 27 entgegenwirkt. Das Rückstellelement 28 ist dabei so dimensioniert, dass seine Rückstellkraft ungefähr gleich der Gewichtskraft der Arretierhülse 27 ist, so dass die Arretierhülse 27 mit einer kleinen, von einem der Sicherungspendel 20' aufgebrachten Kraft verschiebbar ist.

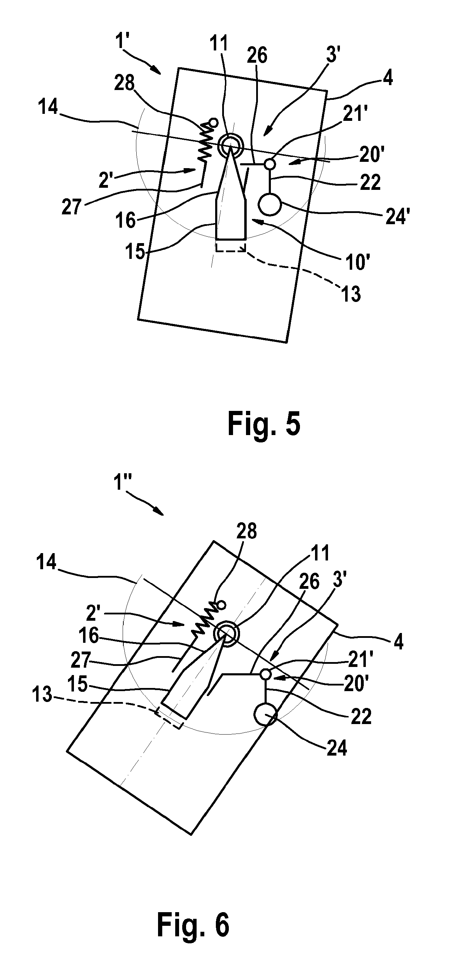

Ein Verkippen der Pendellaservorrichtung 1' aus ihrer senkrechten Ruhelage oder eine horizontale Beschleunigung führt zu einer Auslenkung der Pendelanordnung 2' und wenigstens zweier gegenüberliegender Sicherungspendel 20'. Somit bewirkt wenigstens ein Sicherungspendel 20' ein Verschieben der Arretierhülse 27 in Richtung der Sicherungsposition. Beim in Figur 5 gezeigten Erreichen eines Grenzwinkels α, der einen Rand des Arbeitsbereichs der Pendelanordnung 2' definiert, kommt die Arretierhülse 27 mit der Pendelanordnung 2' in Kontakt und verhindert deren weitere Auslenkung. Beim weiteren Verkippen oder horizontalen Beschleunigen der Pendellaservorrichtung 1' werden die Sicherungspendel 20' weiter ausgelenkt und, und wenigstens eins schiebt die Arretierhülse 27 weiter in die Sicherungsposition, in der sie die Pendelanordnung 2' im Wesentlichen ohne Spiel umgibt und arretiert, wie in Figur 6 gezeigt ist. Während des Überführens in die Sicherungsposition kann das untere Ende der Arretierhülse 27 entlang der Kegeloberfläche des oberen, kegelförmigen Bereichs 16 der Pendelanordnung 2' ablaufen und die Pendelanordnung 2' sukzessive aus ihrer lotrechten Position in die senkrechte Ruheposition überführen. Auch hier wird die Pendelanordnung 2' beim liegenden Transport der Pendellaseranordnung 1' automatisch durch die Sicherungsvorrichtung 3' arretiert. Durch das Zusammenspiel der Sicherungspendel 20' wird erreicht, dass eine Auslenkung der Pendelanordnung 2' über den Grenzwinkel in einer beliebigen Raumrichtung zum Arretieren der Pendelanordnung 2' durch die Arretierhülse 27 führt.

Wenn das Verkippen der Pendellaseranordnung 1' reduziert oder die Pendellaseranordnung 1' nicht weiter beschleunigt wird, werden die Sicherungspendel 20' weniger stark ausgelenkt. Damit erfolgt eine axiale Bewegung der Arretierhülse 27 in Richtung der Ruhestellung, so dass die Pendelanordnung 2' freigegeben wird und innerhalb des Grenzwinkels frei schwingen kann.

Die in den hier gezeigten Ausführungsformen verwendete Lasereinheit 13 kann zur Markierung entweder einen Linienlaser oder einen Rotationslaser umfassen. Dies ist prinzipiell unabhängig von der Sicherungsvorrichtung 3, 3' und dient ausschließlich dem gewünschten Einsatzzweck der Pendellaservorrichtung 1, 1'.

## Patentansprüche

1. Pendellaservorrichtung (1, 1') zur Nivellierung und/oder Markierung mit einem Gehäuse (4), einer an dem Gehäuse (4) angeordneten Pendelanordnung (2, 2'), einer an der Pendelanordnung (2, 2') angebrachten Lasereinheit (13), die mittels der Pendelanordnung (2, 2') unabhängig von der Gehäuseausrichtung frei selbstausrichtbar und zur Erzeugung von am Lot ausgerichteter Laserstrahlung ausgelegt ist, und einer Sicherungsvorrichtung (3, 3'), mit welcher die Pendelanordnung (2, 2') arretierbar ist, **dadurch gekennzeichnet, dass** die Sicherungsvorrichtung (3, 3') derart ausgeführt ist, dass sie die Pendelanordnung (2, 2') bei einer durch eine Bewegung des Gehäuses (4) bewirkten Auslenkung der Pendelanordnung (2, 2') über einen Grenzwinkel α automatisch arretiert.

2. Pendellaservorrichtung (1, 1') nach Anspruch 1, **dadurch gekennzeichnet, dass** die Sicherungsvorrichtung (3) ein zweiarmiges Sicherungspendel (20) mit einem Pendelarm (22), an dem eine Pendelmasse (24) gehalten ist, und einem Arretierarm (23), der derart ausgeführt und angeordnet ist, dass er die Pendelanordnung (2) bei einer Auslenkung über den Grenzwinkel α arretiert, umfasst, wobei das Sicherungspendel (20) beabstandet derart unterhalb der Pendelanordnung (2) vorgesehen ist, dass es in einer senkrechten Ruhestellung lotrecht unter der Pendelanordnung (2) positioniert ist.

3. Pendellaservorrichtung (1, 1') nach Anspruch 2, **dadurch gekennzeichnet, dass** an dem Arretierarm (23) ein Kontaktelement (25), insbesondere in der Form einer Scheibe oder eines Tellers vorgesehen ist, das bei der Auslenkung des Gehäuses (4) über den Grenzwinkel α in reibschlüssigen Kontakt mit der Pendelanordnung (2) tritt und diese arretiert.

4. Pendellaservorrichtung (1, 1') nach Anspruch 3, **dadurch gekennzeichnet, dass** das Kontaktelement (25) an dem äußeren Endbereich des Arretierarms (23) angeordnet ist.

5. Pendellaservorrichtung (1, 1') nach einem der Ansprüche 3 oder 4, **dadurch gekennzeichnet, dass** das Kontaktelement (25) an seiner der Pendelanordnung (2) zugewandten Seite eine gummierte Beschichtung aufweist.

6. Pendellaservorrichtung (1, 1') nach einem der Ansprüche 2 bis 5, **dadurch gekennzeichnet, dass** das Sicherungspendel (20) eine kardanische Lagerung (21) aufweist.

7. Pendellaservorrichtung (1, 1') nach Anspruch 1, **dadurch gekennzeichnet, dass** die Sicherungsvorrichtung (3') ein zweiarmiges Sicherungspendel (20'), das einen Pendelarm (22'), an dem eine Pendelmasse (24') gehalten ist, und einen Betätigungsarm (26) aufweist, sowie eine Arretierhülse (27) umfasst, wobei die Arretierhülse (27) derart positioniert ist, dass sie die Pendelanordnung (2') in einer senkrechten Ruhestellung koaxial umgibt, und entlang der Pendelanordnung (2') zwischen einer oberen Arbeitsposition, in der sie die Pendelanordnung (2') mit einem Spiel umfasst, so dass die Pendelanordnung (2') in dem Arbeitsbereich bewegbar ist, und einer unteren Sicherungsposition, in der sie die Pendelanordnung (2') im Wesentlichen formschlüssig umfasst, axial verschiebbar ist, und der Betätigungsarm (26) mit der Arretierhülse (27) gekoppelt ist, um bei einer durch eine Bewegung des Gehäuses (4) bewirkten Auslenkung der Pendelanordnung (2') eine Verschiebung der Arretierhülse (27) zu bewirken.

8. Pendellaservorrichtung (1, 1') nach Anspruch 7, **dadurch gekennzeichnet, dass** der Betätigungsarm (26) in einem Winkel von weniger als 180°, vorzugsweise etwa 90° zu dem Pendelarm (22') angeordnet und mit seinem freien Ende auf der Arretierhülse (27) aufliegt.

9. Pendellaservorrichtung (1, 1') nach einem der Ansprüche 7 oder 8, **dadurch gekennzeichnet, dass** mehrere Sicherungspendel (20') vorgesehen sind, die in Umfangsrichtung versetzt um die Arretierhülse (27) angeordnet sind, wobei der Betätigungsarm (26) jedes Sicherungspendels (20') mit der Arretierhülse (27) gekoppelt ist oder mit seinem freien Ende darauf aufliegt.

10. Pendellaservorrichtung (1, 1') nach einem der Ansprüche 7 bis 9, **dadurch gekennzeichnet, dass** sich der Pendelarm (10') zumindest abschnittsweise zu seinem Pendellager (11') verjüngt, um das Überführen der Arretierhülse (2') in die Sicherungsposition zu erleichtern.

11. Pendellaservorrichtung (1, 1') nach einem der Ansprüche 7 bis 10, **dadurch gekennzeichnet, dass** ein elastisches Rückstellelement (28) vorgesehen und derart mit der Arretierhülse (27) gekoppelt ist, dass die Rückstellkraft des Rückstellelements (28) der Gewichtskraft der Arretierhülse (27) entgegenwirkt.

12. Pendellaservorrichtung (1, 1') nach einem der vorhergehenden Ansprüche, **dadurch gekennzeichnet, dass** die Lasereinheit (13) einen Linienlaser oder einen Rotationslaser umfasst.
